Europäisches Patentamt

European Patent Office

Office européen des brevets

(19)

(11) EP 0 533 259 B1

(12) EUROPÄISCHE PATENTSCHRIFT

(45) Veröffentlichungstag und Bekanntmachung des Hinweises auf die Patenterteilung:
12.05.1999 Patentblatt 1999/19

(51) Int Cl.⁶: G10L 5/06

(21) Anmeldenummer: 92202782.6

(22) Anmeldetag: 11.09.1992

(54) **Verfahren und Anordnung zum Erkennen einer Folge von Wörtern**

Method and apparatus for recognizing a sequence of words

Procédé et dispositif pour reconnaitre une suite de mots

(84) Benannte Vertragsstaaten:
DE FR GB

(30) Priorität: 14.09.1991 DE 4130633

(43) Veröffentlichungstag der Anmeldung:
24.03.1993 Patentblatt 1993/12

(73) Patentinhaber:
• **Philips Patentverwaltung GmbH**
**22335 Hamburg (DE)**
Benannte Vertragsstaaten:
**DE**
• **Koninklijke Philips Electronics N.V.**
**5621 BA Eindhoven (NL)**
Benannte Vertragsstaaten:
**FR GB**

(72) Erfinder:
• **Häb-Umbach, Reinhold, Dr.,**
**Philips Patentv. GmbH**
**20097 Hamburg (DE)**
• **Ney, Hermann. Dr., c/o Philips Patentv. GmbH**
**20097 Hamburg (DE)**

(74) Vertreter: **Peters, Carl Heinrich, Dipl.-Ing. et al**
**Philips Patentverwaltung GmbH,**
**Röntgenstrasse 24**
**22335 Hamburg (DE)**

(56) Entgegenhaltungen:
**EP-A- 0 285 211**          **WO-A-87/07749**

• **ICASSP-87 Bd. 2 , 1987 Seiten 833 - 836 H.NEY ET AL. 'A data-driven organization of the dynamic programming beam search for continuous speech recognition'**
• **AT&T TECHNICAL JOURNAL Bd. 68, Nr. 3 , Mai 1989 , SHORT HILLS NY Seiten 114 - 130 C.H.LEE 'Applications of dynamic programming to speech and language processing'**
• **ICASSP 91, Vol. 1, Seiten 659-662, X. L. Aubert, "FAST LOOK-AHEAD PRUNING STRATEGIES IN CONTINUOUS SPEECH RECOGNITION".**

**Beschreibung**

Die Erfindung betrifft ein Verfahren zum Erkennen einer Folge von Wörtern in einem Sprachsignal, mit folgenden Schritten:

-    Zu wiederholten Zeitpunkten wird das Sprachsignal abgetastet, um eine Folge von Testsignalen zu erzeugen, und es wird ein signalweiser Haupt-Vergleich mit Bewertung zwischen den Testsignalen und verschiedenen Folgen von Referenzsignalen durchgeführt, die zu einem Satz von Folgen von Referenzsignalen gehören, wobei jede Folge von Referenzsignalen ein Wort des Vokabulars darstellt;
-    zu einem bestimmten ersten Testsignal wird jeder ersten Folge von vorläufig erkannten Wörtern, die bei diesem ersten Testsignal endet, ein erster Bewertungswert zugeordnet.

Die maschinelle Erkennung von Sprache ist eine sich schnell entwickelnde Technik. Ein allgemeines Problem dabei ist die außerordentlich große Menge von Verarbeitungsschritten, die für ein realistisch großes Vokabular von z.B. etwa 10.000 Wörtern benötigt wird. In der Vergangenheit war es möglich, den Umfang der Verarbeitung etwas durch eine einfache Art von Vorabbewertung zu verringern, vgl. ICASSP 91, Vol. 1, Seiten 659-662, X.L. Aubert, "FAST LOOK-AHEAD PRUNING STRATEGIES IN CONTINUOUS SPEECH RECOGNITION.

Eine solche Vorabbewertung erlaubt die Auswahl von nur solchen Suchpfaden, die eine ausreichend hohe Wahrscheinlichkeit aufweisen, daß sie zu einer richtigen endgültigen Erkennung führen.

Das Fortschreiten der einzelnen Hypothesen innerhalb der Wörter wird oft durch Methoden der dynamischen Programmierung gesteuert, die eine gewisse Zeitverzerrung durchführen, da die Geschwindigkeit der tatsächlichen Sprache nicht unbedingt mit der Geschwindigkeit übereinstimmt, die die modellierte Sprache vorschreibt. Darüber hinaus ermöglichen Sprachmodelle für Übergänge zwischen aufeinanderfolgenden Wörtern, die Erkennungswahrscheinlichkeit zu erhöhen und den Suchraum zu begrenzen. Der Suchraum wird zum einen durch das Beenden von Hypothesen mit extremen Bewertungswerten und zum anderen durch eine Vorabbewertung nach dem Ende eines Wortes begrenzt, bevor Teilhypothesen für folgende Wörter fortgesetzt werden. Dafür wird eine Teilfolge von Testsignalen grob mit Referenzsignalen verglichen. Eine momentane Hypothese wird nur dann fortgesetzt, wenn ihre Wahrscheinlichkeit unabhängig vom vorhergehenden Zusammenhang ausreichend hoch ist. Da die Vorabbewertung eine Anzahl von Testsignalen vor deren Verwendung für die eigentliche Erkennung erfolgt, ist es üblich, eine geeignete Verzögerung zwischen den beiden Operationen vorzusehen. Da diese jedoch höchstens einen Bruchteil einer Sekunde beträgt, wird auch eine Echtzeit-Erkennung kaum beeinträchtigt.

Die Vorabbewertung ist im allgemeinen auch deswegen schnell, weil sie nur einen Teil der Verarbeitungsschritte erfordert, die für die vollständige Verarbeitung notwendig sind. Insbesondere die Zurückverfolgung der vorhergehenden Hypothesen ist nicht erforderlich.

Um die Vorabbewertung zu beschleunigen, bilden beim Stand der Technik die Folgen von Referenzsignalen Phoneme, und das Vokabular ist als Phonemliste aufgebaut, und jede Listenposition enthält Phoneme und Angaben von allen möglicherweise folgenden Phonemen und zutreffendenfalls die Angabe eines Wortes, das mit diesem Phonem endet und alle vorhergehenden Phoneme in der richtigen Reihenfolge enthält. Das Vokabular bildet somit einen Baum, bei dem die einzelnen Zweige Phoneme darstellen. Diese enthalten besondere Referenzsignale, die zwar mit den bei der Erkennung verwendeten Referenzsignalen in Beziehung stehen, sich jedoch von diesen unterscheiden. Ferner wird nicht die Wahrscheinlichkeit, d.h. der Bewertungswert der vorhergehenden Hypothese berücksichtigt, sondern bei der Vorabbewertung werden lediglich solche Wortkandidaten für die Fortsetzung ausgewählt, die eine gute Ähnlichkeit mit dem entsprechenden Sprachsignalabschnitt zeigen. Dabei wird ein Schwellwert verwendet, der während des Ablaufs der Vorabbewertung vorzugsweise linear vergrößert wird. Es soll nämlich möglichst verhindert werden, daß bei der Vorabbewertung ein Wortkandidat eliminiert wird, der im späteren Zusammenhang insbesondere aufgrund des verwendeten Sprachmodells tatsächlich die beste Hypothese darstellt, diese durch ein undeutlich gesprochenes Wort abgeschnitten werden könnte. Aus diesem Grunde werden viele Hypothesen fortgesetzt, obwohl am Ende vor der Fortsetzung eine große Unterschiedssumme vorhanden war.

Aufgabe der Erfindung ist es unter anderem, ein Verfahren der eingangs genannten Art anzugeben, bei dem mit möglichst wenig Aufwand für die Vorabbewertung eine wirksame Verringerung des Suchraums möglich ist.

Diese Aufgabe wird erfindungsgemäß dadurch gelöst, daß zusätzlich zu den eingangs genannten Verfahrensschritten folgende vorgesehen werden:

-    Von einem bestimmten zweiten Testsignal an, das dem ersten Testsignal folgt, wird ein signalweiser Vorab-Vergleich mit Bewertung zwischen einer ersten Teilfolge begrenzter Länge von Testsignalen und verschiedenen zweiten Teilfolgen von Referenzsignalen aus dem Satz von Folgen durchgeführt, wobei jede zweite Teilfolge den Anfangsteil eines Vokabularwortes darstellt und jede solche Teilfolge einen zugeordneten Teilbewertungswert erzeugt;
-    jeder dieser Teilbewertungswerte wird zu jedem der ersten Bewertungswerte addiert, um jeweils einen Gesamtbewertungswert zu bilden, wobei jede zweite Teilfolge beendet wird, wenn der Gesamtbewertungswert einen ersten Schwellwert überschreitet, jedoch der Haupt-Vergleich mit Bewertung für jede andere Teilfolge von Referenzsignalen innerhalb desselben Satzes von Folgen fortgesetzt wird, bis ein folgendes Wortende erreicht ist, wobei ein weiterer erster Bewertungswert erzeugt wird;

- die minimalen gleichzeitig vorhandenen ersten Bewertungswerte werden ausgewählt, um damit zugeordnete Wortfolgen vorläufig zu erkennen, wobei die anderen Folgen beendet werden;
- die erkannte Folge von Wörtern wird dargestellt durch eine nicht beendete erste Folge mit einem zugeordneten minimalen Wert unter den verschiedenen ersten Bewertungswerten.

Zu verschiedenen Begriffen gelten die folgenden Bemerkungen:

- Die Abtastzeitpunkte sind im allgemeinen, jedoch nicht notwendigerweise, periodisch;
- zu jedem einzelnen Zeitpunkt können eine oder mehrere vorläufig erkannte Wortketten gleichzeitig enden;
- der Vergleich und die Bewertung können unter Anwendung von Maßnahmen der an sich bekannten dynamischen Programmierung durchgeführt werden;
- zu jedem Zeitpunkt werden lediglich gleichzeitig erreichte Bewertungen miteinander verglichen. Es können andere verfolgte Pfade bestehen, die zu diesem Zeitpunkt gesondert behandelt werden.

Um zu vermeiden, daß zu viele Kandidaten für fortzusetzende Folgen entstehen, sind zum einen die Referenzsignale für die Vorabbewertung dieselben wie für die eigentliche Erkennung, so daß die Berechnungen weitgehend übereinstimmen. Dadurch, daß der Bewertungswert am Ende der fortzusetzenden Folge zu dem bei der Vorabbewertung gewonnenen Bewertungswert addiert wird, kann die Anzahl fortzusetzender Folgen zuverlässig niedrig gehalten werden. Wenn nämlich eine vorläufige Erkennung mit einem relativ niedrigen Bewertungswert geendet hat, führt ein genügend großer erster Schwellwert dazu, daß eine größere Anzahl von Folgen von Referenzsignalen oder Wörtern fortgesetzt wird, so daß die über alles günstigste Hypothese nicht verloren geht. Andererseits wird, wenn eine Teilhypothese mit einem großen Bewertungswert geendet hat, so daß diese Hypothese ohnehin unwahrscheinlich ist, die weitere Erkennung mit nur einer geringen Anzahl Folgen fortgesetzt, so daß die Erkennung stets mit nur den am meisten erfolgversprechenden Folgen fortgesetzt wird. Auf diese Weise kann der Suchraum also klein gehalten werden, ohne daß Gefahr besteht, daß zwischenzeitlich die optimale Hypothese verloren geht.

Vorzugsweise hat der erste Schwellwert eine vorgegebene algebraische Beziehung zu dem momentanen minimalen Wert von allen Gesamtbewertungswerten, die zu den ersten Bewertungswerten gehören. Die Verwendung der jeweils besten Hypothese am Anfang und Ende der beiden Teilfolgen führt zu einer nur geringfügig erhöhten Fehlerrate gegenüber einer Erkennung ohne Vorabbewertung, die jedoch wesentlich aufwendiger ist. Eine besonders einfache Realisierung ergibt sich dadurch, daß der erste Schwellwert gleich der Summe der beiden Bewertungswerte, erhöht um einen festen Schwellenbetrag, ist. Dies erfordert nur einen geringen Rechenaufwand.

Es sind Verfahren zur Spracherkennung bekannt, wobei während der Erkennung der Vergleich des momentanen Testsignals und der folgenden Testsignalen mit Referenzsignalen innerhalb der Wörter nur fortgesetzt wird, wenn der beim momentanen Testsignal jeweils erreichte Bewertungswert unter einem zweiten Schwellwert liegt, der gleich dem um einen festen Schwellenbetrag erhöhten minimalen Bewertungswert beim momentanen Testsignal ist. Bei solchen Verfahren ist es besonders zweckmäßig, daß der Schwellenbetrag für die Bildung des ersten Schwellenwertes und der Schwellenbetrag für die Bildung des zweiten Schwellenwertes gleich sind. Auf diese Weise werden die gleichen Kriterien für das Fortsetzen bzw. Abschneiden von Hypothesen sowohl innerhalb von Wörtern als auch an Wortübergängen verwendet.

Bei den bekannten Verfahren ist es üblich, daß während der Vorabbewertung nach jedem Vergleich eines Testsignals mit Referenzsignalen Vergleiche folgender Testsignale mit Referenzsignalen nur dann vorgenommen werden, wenn der zugehörige Bewertungswert unter einem dritten Schwellwert liegt. Der dritte Schwellwert dient dazu, wenig erfolgversprechende Fortsetzungen durch die Vorabbewertung und den Vergleich mit dem dritten Schwellwert ganz zu eliminieren, um auf diese Weise den Suchraum einzuschränken. Daher ist beim bekannten Verfahren der dritte Schwellwert insofern kritisch, daß ein zu großer Schwellwert zu einem zu großen Suchraum führt, während bei zu kleinem Schwellwert möglicherweise die Hypothese, die sich ohne Vorabbewertung am Ende als optimal herausstellen würde, durch die Vorabbewertung abgeschnitten wird. Beim erfindungsgemäßen Verfahren dient der dritte Schwellwert jedoch ausschließlich dazu, den Rechenaufwand bei der Vorabbewertung zu verringern. Es ist daher nach einer weiteren Ausgestaltung der Erfindung zweckmäßig, daß der dritte Schwellwert mit einer konstanten Beziehung zu dem kleinsten Bewertungswert aller Referenzsignale bei diesem Testsignal gebildet wird. Damit kann der dritte Schwellwert mit wenig Rechenaufwand ermittelt werden. Besonders gering ist der Rechenaufwand, wenn dabei der dritte Schwellwert gleich dem um einen Schwellenbetrag erhöhten minimalen Bewertungswert bei diesem Testsignal ist. Dabei kann der Schwellenbetrag bei der Vorabbewertung auch kleiner als der Schwellenbetrag bei der Erkennung sein.

Für den Zeitraum, über den die Vorabbewertung vorgenommen wird, muß ein Kompromiß geschlossen werden, denn bei einem langen Zeitraum erfordert die Vorabbewertung selbst einen entsprechend größeren Rechenaufwand, der der Einsparung durch die Vorabbewertung bei der eigentlichen Erkennung gegenübersteht, während bei einem sehr kurzen Zeitraum die Vorabbewertung zu wenig Information ergibt, um bei der Erkennung wesentliche Rechenzeit einsparen zu können. Eine Ausgestaltung der Erfindung ist daher dadurch gekennzeichnet, daß die Vorabbewertung nur für die Dauer eines Phonems vorgenommen wird. Dies ergibt schon ausreichend Information, um merkliche Rechenzeit einzusparen, insbesondere, wenn für die Erkennung selbst das Vokabular in Form einer Baumliste vorliegt, wie in der prioritätsgleichen Patentanmeldung (deutsche Patentanmeldung P 41 30 631.7, PHD 91-138) angegeben ist. Insbesondere ist dann für die Vorabbewertung die ganze Baumliste des Vokabulars aber nicht mehr erforderlich, sondern es genügt eine einfache Liste aller Phoneme, d.h. die erste Stufe der Baumliste, wenn darin alle Phoneme vorkommen.

Um den Rechenaufwand bei der Vorabbewertung zusätzlich zu verringern, ist es nach einer weiteren Ausgestaltung der Erfindung zweckmäßig, daß die Vorabbewertung nur mit jedem geradzahligen Testsignal begonnen wird. Es hat sich herausgestellt, daß sich dabei eine genügend genaue Abschätzung für die Folgen ergibt, die fortzusetzen sind, was durch den Start der Vorabbewertung bei jedem Testsignal nicht nennenswert verbessert wird.

Da bei der Vorabbewertung dieselben Referenzsignale verwendet werden wie bei der Erkennung, ist es nach einer weiteren Ausgestaltung der Erfindung zweckmäßig, daß die während der Vorabbewertung ermittelten Bewertungsdaten beim Vergleich zwischen jeweils einem Testsignal und Referenzsignalen zwischengespeichert und anschließend für die bei der Erkennung durchzuführenden Vergleiche verwendet werden.

Dadurch brauchen die Vergleiche, die während der Vorabbewertung bereits durchgeführt wurden, bei der Erkennung nicht nochmals durchgeführt zu werden, sondern die Ergebnisse können von der Vorabbewertung übernommen werden.

Die Erfindung bezieht sich ferner auf eine Anordnung zur Durchführung des Verfahrens.

Weitere vorteilhafte Ausgestaltungen der Erfindung sind in den Unteransprüchen angegeben.

Diese und weitere Aspekte der Erfindung werden nachfolgend anhand der Zeichnung näher erläutert, die ein nicht einschränkendes Ausführungsbeispiel zeigen, und zwar zeigt

Fig. 1 ein grobes Blockschaltbild einer Anordnung zur Spracherkennung mit Vorabbewertung,
Fig. 2 den Aufbau des Vokabulars für die Vorabbewertung,
Fig. 3 schematisch den Aufbau eines Phonems aus Referenzsignalen und die möglichen Übergänge dazwischen.

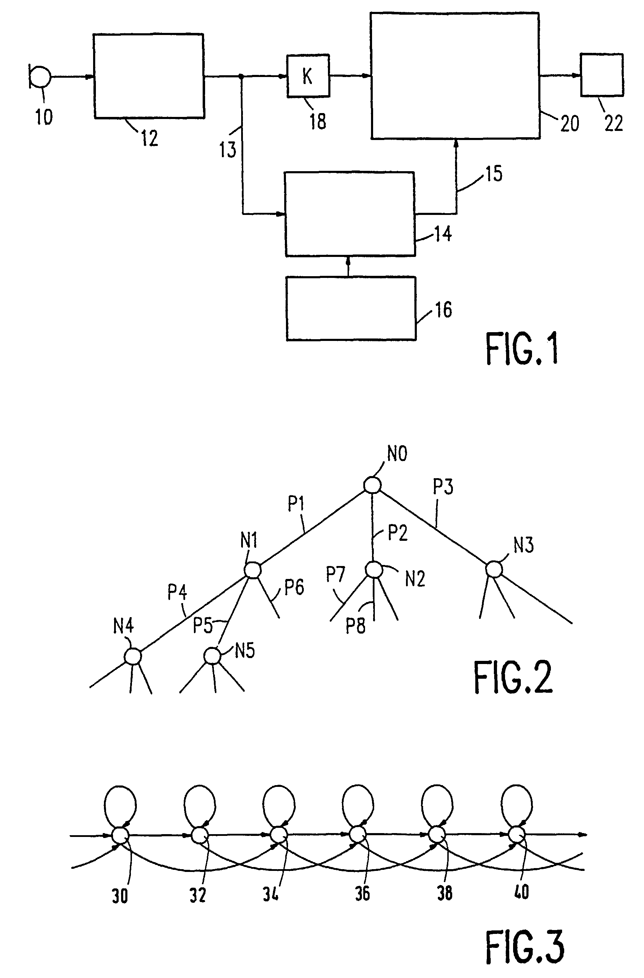

In Fig. 1 wird das über das Mikrofon 10 aufgenommene Sprachsignal in einer Anordnung 12 vorverarbeitet, insbesondere werden für aufeinanderfolgende Sprachsignalabschnitte die spektralen Anteile in digitaler Form ermittelt, wobei die Gesamtheit der jeweils einen Sprachsignalabschnitt darstellenden Werte ein Testsignal darstellt. Diese Testsignale, die auf der Verbindung 13 auftreten, werden zum einen einer Anordnung 14 für eine Vorabbewertung und zum anderen über eine Verzögerungsanordnung 18, die die Testsignale um eine vorgegebene Anzahl K verzögert, der Erkennungsanordnung 20 zugeführt. Diese Erkennungsanordnung erzeugt die verschiedenen Hypothesen. Am Ende des Sprachsignals wird von der Anordnung 20 die Folge der erkannten Wörter einer Ausgabeanordnung 22, beispielsweise einer Anzeige oder einem Drucker, zugeführt.

Die Anordnung 20 für die eigentliche Erkennung kann beispielsweise gemäß der DE-OS 37 10 507 aufgebaut sein. Bei dieser werden während der Suche, d.h. während der Verarbeitung der aufeinanderfolgenden Testsignale, eine Vielzahl von Hypothesen in einem aus den Testsignalen und den Referenzsignalen gebildeten Suchraum aufgebaut, wobei Hypothesen mit ungünstigem Bewertungswert, die einen Schwellwert überschreiten, abgebrochen werden, und wenn jeweils ein mögliches Wortende erreicht wird, erfolgt eine Verzweigung auf eine Anzahl weiterführender Hypothesen durch jeweils neu zu beginnende Wörter, die vorzugsweise nach einem Sprachmodell bestimmt werden. Allgemein ist die Verwendung eines derartigen Suchraumes beschrieben in einem Aufsatz von H. Ney et al. "A data driven organization of the dynamic programming beam search for continuous speech recognition"; 1987, IEEE, No. CH 2396-0/87/0000/0633.

Bei der in Fig. 1 dargestellten Anordnung werden die fortzusetzenden Wörter, also die fortzusetzenden Vergleiche mit Folgen von Referenzsignalen, zusätzlich durch die Ergebnisse der Anordnung 14 für die Vorabbewertung bestimmt, wobei diese Ergebnisse über die Verbindung 15 der Anordnung 20 zugeführt werden.

In der Anordnung 14 werden nun die Testsignale mit allen Wortanfängen des Vokabulars verglichen, d.h. jedes neue Testsignal oder, um den Rechenaufwand zu verringern, jedes zweite neue Testsignal wird als möglicher Wortanfang betrachtet. Die dafür verwendeten Referenzsignale sind in einem Speicher 16 enthalten, und zwar in einer Form, wie in Fig. 2 angedeutet ist. Danach ist das gesamte vorgegebene Vokabular in Form eines Baums aufgebaut, dessen Zweige Phoneme darstellen. Die Anfänge bzw. Enden der Phoneme bilden Knoten. Die Knoten können das Ende eines Wortes darstellen. Die Knoten können jedoch auch den Anfang eines nächsten Phonems des betrachteten Wortes darstellen. Es können auch Kombinationen davon auftreten, indem eine bestimmte Folge von Phonemen ein Wort darstellt, die jedoch außerdem mit einem oder mehreren weiteren Phonemen weitergehen kann, um ein anderes Wort darzustellen. Fig. 2 zeigt einen vereinfachten Baum mit einem sehr kleinen Vokabular. Ausgehend von dem Startknoten NO wird angenommen, daß nur eines von drei Phonemen P1, P2, P3 den Anfang von jedem Wort bildet. In der Praxis ist diese Menge selbstverständlich wesentlich größer. Es kann bestimmte Phoneme geben, die nicht den Anfang eines Wortes darstellen. Das Phonem P1 endet in dem Knoten N1, das Phonem P2 endet in dem Knoten N2, und das Phonem P3 endet in dem Knoten N3. Wie dargestellt, können nachfolgende Phoneme, die von dem Knoten N1 starten, mit P4, das im Knoten N4 endet, P5, das im Knoten N5 endet, und P6 gebildet sein. Dem Knoten N2 nachfolgende Phoneme sind P7 und P8. Der Einfachheit halber ist der übrige Baum nicht dargestellt. Im Prinzip kann jeder Knoten N1, N2 usw. das Ende eines Wortes darstellen. Ferner können verschiedene Phoneme P4, P5 usw. mit einem der Phoneme P1, P2 und P3 identisch sein. Dies gilt auch für die Gruppe von Phonemen P4, P5 und P6, von denen eines oder mehrere identisch mit einem entsprechenden Phonem sein können, die von anderen Knoten wie z.B. N2, N3, N4, N5 ausgehen. Auf diese Weise wird eine Baumstruktur gebildet, die offensichtlich mehr Knoten umfaßt, als das Vokabular Wörter umfaßt. Tatsächlich stellen viele Knotenpunkte nicht gleichzeitig ein Wortende dar.

Fig. 3 zeigt in Form eines Diagramms den Aufbau eines Phonems aus Referenzsignalen und die verschiedenen Übergänge zwischen diesen Referenzsignalen. In diesem Beispiel existieren sechs Referenzsignale 30 ... 40, die formal auch als Zustände bezeichnet werden. Dabei gehen von jedem Zustand in diesem Falle drei Übergänge aus, von denen der eine Übergang auf denselben Zustand zurückführt. Dies bedeutet, daß während des Vergleichs zwischen der Folge von Testsignalen und der Folge von Referenzsignalen die optimale Übereinstimmung auftritt, wenn zwei aufeinanderfolgende Testsignale am besten mit demselben Referenzsignal übereinstimmen. Ferner geht von jedem Zustand ein weiterer Übergang auf den übernächsten Zustand, was bedeutet, daß etwa durch einen schnell gesprochenen Laut zu einem Referenzsignal kein Testsignal am besten paßt. Der normale Weg führt dagegen von einem Zustand jeweils zu dem folgenden, d.h. ein Phonem wird dann durch sechs aufeinanderfolgende Testsignale gebildet. Welches der optimale Übergang von einem Zustand zu einem anderen Zustand ist, wird durch die Methode der dynamischen Programmierung ermittelt.

In der Anordnung 14 wird nun jedes Testsignal mit Referenzsignalen, von denen jede Folge von Referenzsignalen ein anderes Phonem darstellt, verglichen.

Ohne Verwendung einer Schwelle würde jedes Testsignal mit allen Referenzsignalen aller Phoneme verglichen. Es muß nämlich angenommen werden, daß jedes Testsignal den Anfang eines Phonems darstellt, d.h. es muß mit dem ersten Referenzsignal aller Phoneme verglichen werden, jedoch kann es auch sein, daß dasselbe Testsignal das zweite zu einem Phonem gehörende Testsignal ist, so daß es mit den folgenden Referenzsignalen der Phoneme verglichen werden muß. In diesem Falle gehörte das vorhergende Testsignal zum ersten Referenzsignal des Phonems, und dessen Vergleichsergebnis, d.h. dessen Unterschied zu diesem jeweiligen Referenzsignal, muß zu dem Unterschiedswert des zweiten Testsignals hinzuaddiert werden. Ebenso kann das momentane Testsignal auch das dritte oder ein späteres Testsignal des Phonems sein, so daß dann die durch Aufsummierung der Unterschiedswerte gebildeten Bewertungswerte jeweils größer werden. Es entsteht also auf Phonemebene ein Suchraum aus aufeinanderfolgenden Testsignalen und allen Referenzsignalen, wobei jedem Gitterpunkt des Suchraums ein Bewertungswert zugeordnet ist.

Um auch bei der Vorabbewertung den Rechenaufwand zu verringern, wird mit jedem neuen Testsignal geprüft, ob ein dabei entstehender Bewertungswert den minimalen Bewertungswert bei diesem Testsignal um einen vorgegebenen Schwellwert überschreitet. Wenn dies der Fall ist, wird die entsprechende Hypothese in dem Phonem nicht weiter verfolgt. Gelegentlich scheidet dabei auch ein Phonem selbst für die weitere Vorabbewertung und damit auch für die nachfolgende Erkennung aus. Die Verwendung des Schwellwerts innerhalb der Phoneme dient nur zur Verringerung des Rechenaufwandes.

Dies gilt entsprechend auch für Folgen von Phonemen, wobei gemäß Fig. 3 ein Phonem nicht bis zum Ende durchlaufen werden muß, sondern von dem vorletzten Zustand bzw. Referenzsignal ein folgendes Phonem erreicht werden kann. Entscheidend ist nun, welcher Bewertungswert bei den Phonemen oder Phonemfolgen, die von einer Anzahl Testsignalen durchlaufen wurden, wobei diese Anzahl durch die Verzögerungsanordnung 18 bestimmt und mit K bezeichnet ist, erreicht worden ist. Diese Phoneme bzw. Phonemfolgen oder Wörter werden samt ihrer Unterschiedssumme über die Verbindung 15 der Erkennungsanordnung 20 zugeführt. Wenn in dieser Erkennungsanordnung 20 eine Hypothese ein Wortende erreicht, ist aus diesen über die Verbindung 15 zugeführten Angaben bekannt, welche fortzusetzenden Hypothesen nach K Testsignalen einen wie großen zusätzlichen Bewertungswert ergeben. Von den über die Verbindung 15 übertragenen Phonemen werden nun aber nur diejenigen für die Fortsetzung von Hypothesen verwendet, bei denen eine um K Testsignale extrapolierte Fortsetzung einen Bewertungswert oder genauer eine Bewertung, die sich aus den Bewertungswerten und der Berücksichtigung eines Sprachmodells ergeben, erreicht, die einen Schwellwert nicht überschreitet, der aus dem minimalen extrapolierten Bewertungswert und einem Schwellwertbetrag gebildet ist. Es muß also folgende Bedingung eingehalten werden

$$S^E_{v1...vn}(1:l) + S_w(l+1:l+K) + S_{LM}(w/v1...vn)$$

$$\leq S_{min}(l) + S_{min, LA}(l+1:l+K) + T$$

Darin bedeuten

$S^E_{v1...vn}(1:l)$ den Bewertungswert am Ende der Wortkette vl...vn beim Testsignal l,
$S_w(l+1:l+K)$ den Bewertungswert bei der Vorabbewertung für die folgenden K Testsignale für die Phonemfolge bzw. für das Wort w,
$S_{LM}(w/v1...vn)$ ein zusätzlicher Wert aufgrund des Sprachmodells, wenn der Wortfolge vl...vn das Wort w angefügt wird,
$S_{min}(l)$ den minimalen Bewertungswert beim Testsignal l,
$S_{min, LA}(l+1:l+K)$ den minimalen Bewertungswert, der sich für alle folgenden Phonemketten oder Phonemwörter nach K Testsignalen bei der Vorabbewertung ergeben hat,
T ein fester Schwellenbetrag.

Auf diese Weise wird also nicht nur die Vorabbewertung allein, sondern auch der sich am Ende jeweils einer Teilhypothese in der Erkennungsanordnung 20 ergebende Gesamtbewertungswert berücksichtigt, so daß eine Teilhypothese, die mit einem schlechten Gesamtbewertungswert endet, mit nur wenigen Phonemfolgen bzw. Wörtern fortgesetzt wird, die mit den unmittelbar zukünftigen Testsignalen eine besonders gute Übereinstimmung zeigen. Teilhypothesen, die mit einem guten Gesamtbewertungswert enden, werden dagegen mit einer größeren Anzahl von Phonemfolgen bzw. Wörtern fortgesetzt.

Auf diese Weise wird der Suchraum der Erkennungsanordnung 20 stets möglichst klein gehalten.

Aus diesem Grunde kann es ausreichend sein, die Vorabbewertung nur für die Dauer eines einzigen Phonems vorzunehmen. Außerdem muß dann nicht für die Vorabbewertung das vollständige Vokabular in Form der Baumliste vorhanden sein, sondern es genügt die einfache Liste aller Phoneme.

Da die meisten Phoneme eine Dauer von etwa 60 bis 70 ms haben und somit bei einer Dauer der Zeitabstände, in denen jeweils ein neues Testsignal gewonnen wird, von 10 ms zweckmäßig aus sechs Zuständen, d.h. aus sechs aufeinanderfolgenden Referenzsignalen bestehen, ist der Wert K=6. Falls ein Phonem kürzer ist oder nach einer geringeren Anzahl von Testsignalen das Ende eines Phonems erreicht wird, müssen alle bei der Vorabbewertung erhaltenen Bewertungswerte durch die jeweils tatsächliche Phonemlänge dividiert werden, um vergleichbare Werte zu erhalten.

Eine weitere Verringerung des Rechenaufwandes wird dadurch erreicht, daß die Vorabbewertung nur mit jedem zweiten Testsignal begonnen wird. Während der Vorabbewertung wird dann aber jedes Testsignal verwendet. Die dadurch entstehende etwas ungünstige Anpassung am Anfang wird durch die Anpassung innerhalb des Phonems mittels der dynamischen Programmierung weitgehend wieder ausgeglichen, und ein verbleibender geringer Fehler der Bewertungswerte durch einen verzögerten Beginn der Vorabbewertung kann durch den Schwellwert bei der anschließenden Entscheidung, wie eine Teilhypothese in der Erkennungsanordnung 20 fortzusetzen ist, berücksichtigt werden. Da endende Teilhypothesen allgemein bei jedem Testsignal auftreten können, werden die über die Verbindung 15 der Erkennungsanordnung 20 zugeführten Werte der Vorabbewertung bei jeweils zwei aufeinanderfolgenden Testsignalen verwendet.

Da bei der Vorabbewertung in der Anordnung 14 alle Bewertungswerte gebildet werden, die anschließend für die Erkennung in der Erkennungsanordnung 20 benötigt werden, werden diese tatsächlich nur einmal berechnet und dann zwischengespeichert und mit entsprechender Zeitverzögerung ebenfalls über die Verbindung 15 der Erkennungsanordnung 20 zugeführt. Damit kann der Rechenaufwand weiter verringert werden.

Es ist klar, daß die Anordnung 14 zur Vorabbewertung und die Erkennungsanordnung 20 zu einer einzigen Anordnung zusammengefaßt werden können, wobei sie zweckmäßig durch einen Mikroprozessor bzw. entsprechend ausgerüsteten Rechner gebildet werden.

**Patentansprüche**

1. Verfahren zum Erkennen einer Folge von Wörtern in einem Sprachsignal, mit folgenden Schritten:

   - Zu wiederholten Zeitpunkten wird das Sprachsignal abgetastet, um eine Folge von Testsignalen zu erzeugen, und es wird ein signalweiser Haupt-Vergleich mit Bewertung zwischen den Testsignalen und verschiedenen Folgen von Referenzsignalen durchgeführt, die zu einem Satz von Folgen von Referenzsignalen gehören, wobei jede Folge von Referenzsignalen ein Wort des Vokabulars darstellt;
   - zu einem bestimmten ersten Testsignal wird jeder ersten Folge von vorläufig erkannten Wörtern, die bei diesem ersten Testsignal endet, ein erster Bewertungswert zugeordnet;
   - von einem bestimmten zweiten Testsignal an, das dem ersten Testsignal folgt, wird ein signalweiser Vorab-Vergleich mit Bewertung zwischen einer ersten Teilfolge begrenzter Länge von Testsignalen und verschiedenen zweiten Teilfolgen von Referenzsignalen aus dem Satz von Folgen durchgeführt, wobei jede zweite Teilfolge den Anfangsteil eines Vokabularwortes darstellt und jede solche Teilfolge einen zugeordneten Teilbewertungswert erzeugt;

- jeder dieser Teilbewertungswerte wird zu jedem der ersten Bewertungswerte addiert, um jeweils einen Gesamtbewertungswert zu bilden, wobei jede zweite Teilfolge beendet wird, wenn der Gesamtbewertungswert einen ersten Schwellwert überschreitet, jedoch der Haupt-Vergleich mit Bewertung für jede andere Teilfolge von Referenzsignalen innerhalb desselben Satzes von Folgen fortgesetzt wird, bis ein folgendes Wortende erreicht ist, wobei ein weiterer erster Bewertungswert erzeugt wird;

- die minimalen gleichzeitig vorhandenen ersten Bewertungswerte werden ausgewählt, um damit zugeordnete Wortfolgen vorläufig zu erkennen, wobei die anderen Folgen beendet werden;

- die erkannte Folge von Wörtern wird dargestellt durch eine nicht beendete erste Folge mit einem zugeordneten minimalen Wert unter den verschiedenen ersten Bewertungswerten.

2. Verfahren nach Anspruch 1, wobei der erste Schwellwert eine vorgegebene algebraische Beziehung zu dem momentanen minimalen Wert von allen Gesamtbewertungswerten hat, die zu den ersten Bewertungswerten gehören.

3. Verfahren nach Anspruch 2, wobei die vorgegebene Beziehung ein fester Schwellwertabstand ist.

4. Verfahren nach Anspruch 3, wobei jede der ersten Folgen beendet wird, wenn sie den momentanen minimalen Bewertungswert um den vorgegebenen Schwellwertbereich überschreitet.

5. Verfahren nach einem der Ansprüche 1 bis 4, wobei während des Vorab-Vergleichs eine laufende vorläufige Teilbewertung durchgeführt wird und der Vorab-Vergleich für jeden laufenden vorläufigen Teilbewertungswert beendet wird, der einen vorgegebenen dritten Schwellwert überschreitet.

6. Verfahren nach Anspruch 5, wobei der dritte Schwellwert gleich dem momentanen minimalen laufenden Teilbewertungswert, erhöht um einen dritten Schwellwertbereich, ist.

7. Verfahren nach einem der Ansprüche 1 bis 6, wobei jede der Teilfolgen der Länge eines einzelnen Phonems entspricht.

8. Verfahren nach einem der Ansprüche 1 bis 7, wobei jedes zweite Testsignal gradzahlig ist.

9. Verfahren nach einem der Ansprüche 1 bis 8, wobei jedes der Bewertungsdaten, die während des Vorab-Vergleichs erhalten wurden, für die Verwendung in dem Haupt-Vergleich zwischengespeichert wird.

10. Anordnung zur Durchführung des Verfahrens nach einem der Ansprüche 1 bis 9, mit

- Eingabemitteln (10) zum Empfangen eines Sprachsignals,
- von diesen Eingabemitteln (10) gespeiste Abtastmittel (12) zum Abtasten des Sprachsignals zu wiederholten Zeitpunkten und zum Erzeugen eines Testsignals bei jedem Zeitpunkt,
- Vergleichs- und Bewertungsmittel, (20), die von den Abtastmitteln (12) gespeist werden, um bei einem bestimmten ersten Testsignal jeder ersten Folge von vorläufig erkannten Wörtern, die bei diesem ersten Testsignal endet, einen ersten Bewertungswert zuzuordnen,

gekennzeichnet durch

- Vorabbewertungsmittel (14), die mit den Abtastmitteln (12) und mit Speichermitteln (16) zum Speichern eines Satzes von Folgen von Referenzsignalen, wobei jede solche Folge ein Vokabularwort darstellt, gekoppelt sind, um von einem bestimmten zweiten, dem ersten Testsignal folgenden Testsignal an ersten Teilfolgen begrenzter Länge Vorabbewertungswerte mit Bezug auf jede der verschiedenen Teilfolgen von Referenzsignalen des Satzes von Folgen zuzuordnen, wobei jede Teilfolge einen Anfangsteil eines Vokabularwortes darstellt, und diese Folgen den Vergleichs- und Bewertungsmitteln (20) zuzuführen, wobei die Vergleichs- und Bewertungsmittel eingerichtet sind, um jeden ersten Bewertungswert zu jedem der Vorabbewertungswerte zu addieren und einen Summenwert zu bilden und jede Folge zu beenden, für deren zugehörige zweite Teilfolge der Summenwert einen momentanen Schwellwert überschreitet, und um den Vergleich mit Bewertung für alle nicht beendeten Folgen von Referenzsignalen weiterzuführen, bis das Ende eines folgenden Wortes erreicht ist, bei dem ein nächster erster Bewertungswert erzeugt wird.

## Claims

1. A method of recognizing a sequence of words in a speech signal, said method comprising the steps of:

- at recurrent instants, sampling said speech signal for generating a series of test signals and executing a mainstream signal-by-signal matching and scoring between said test signals and various series of reference signals from a unitary set of reference signal series that each represent a vocabulary word;
- at a particular first test signal, assigning a first score to any first string of preliminarily recognized words terminating at said first test signal;
- as from a particular second test signal subsequent to the first test signal, executing a look-ahead signal-by-signal matching and scoring between a limited-length first sub-series of test signals with various second sub-series of reference signals from said unitary set, each second sub-series representing the initial part of a vocabulary word, each such second sub-series so producing an associated sub-score;
- adding any said sub-score to any said first score for producing a respective aggregate score and discarding the second sub-series for any aggregate score surpassing a first threshold, but continuing said mainstream matching for any other sub-series of reference signals within the same set of series until attainment of a subsequent word termination and producing a further first score;
- selecting coexistent minimum first score values for so preliminarily recognizing any associated word string but otherwise discarding the other strings;
- recognizing said sequence as represented by a non-discarded first string on the basis of an associated minimum value among various first scores.

2. A method as claimed in claim 1, wherein the first threshold value has a predetermined algebraic relation to the instantaneous minimum value among any aggregate score pertaining to the first scores.

3. A method as claimed in claim 2, wherein said predetermined relation is a fixed threshold margin.

4. A method as claimed in claim 3, wherein any said first string is discarded upon exceeding said fixed threshold margin with respect to the instantaneous minimum score.

5. A method as claimed in any one of claims 1 to 4, wherein during said look-ahead matching a running preliminary sub-scoring is effected and said look-ahead matching is terminated for any running preliminary sub-score exceeding a predetermined third threshold value.

6. A method as claimed in claim 5, wherein the third threshold value equals the instantaneous minimum running preliminary sub-score plus a third threshold margin.

7. A method as claimed in any one of claims 1 to 6, wherein each sub-series correspond to a single phoneme's length.

8. A method as claimed in any one of claims 1 to 7, wherein any second test signal is even-numbered.

9. A method as claimed in any one of claims 1 to 8, wherein any scoring data gathered during said look-ahead matching is saved for use in said mainstream matching.

10. An apparatus for performing the method as claimed in any one of claims 1 to 9, comprising:

- input means (10) for receiving a speech signal;
- sampling means (12) fed by said input means (10) for sampling said speech signal at recurrent instants and generating a test signal at each instant;
- matching and scoring means (20) fed by said sampling means (12) for assigning, at a particular first test signal, a first score to any first string of preliminarily recognized words terminating at said first test signal;

characterized by

- look-ahead score means (14) coupled to said matching means (12) and to storage means (16) for storing a unitary set of reference signal series that each represent a vocabulary word so as to assign, as from a particular second test signal subsequent to the first test signal, look-ahead scores to limited-length first sub-strings with respect to each of various sub-series of reference signals from said unitary set, each sub-series representing an initial part of a vocabulary word, and so as to apply said series to the matching and scoring means (20) which are adapted to add any first score to each of the look-ahead scores and form a sum value, and to terminate any series for whose associated second sub-series the sum value exceeds an instantaneous threshold value,

and to continue the matching and scoring operation for all non-terminated reference signal series until the end of a subsequent word is reached, at which a subsequent first score is obtained.

## Revendications

1. Procédé de reconnaissance d'une séquence de mots dans un signal de parole comportant les étapes suivantes :

   - à des moments répétés, le signal de parole est lu pour produire une séquence de signaux de test et une comparaison principale de type signal est effectuée avec une évaluation entre les signaux de test et différentes séquences de signaux de référence qui font partie d'un jeu de séquences de signaux de référence, chaque séquence de signaux de référence représentant un mot du vocabulaire ;
   - à un premier signal de test déterminé, une première valeur d'évaluation est affectée à chaque première séquence de mots reconnus provisoirement qui se termine par ce premier signal de test;
   - à partir d'un deuxième signal de test déterminé qui suit le premier signal de test, une comparaison préalable de type signal est effectuée avec une évaluation entre une première séquence partielle de longueur limitée de signaux de test et différentes deuxièmes séquences partielles de signaux de référence à partir du jeu de séquence, chaque deuxième séquence partielle représentant le début d'un mot du vocabulaire et chaque séquence partielle produisant une valeur d'évaluation partielle qui lui est affectée ;
   - chacune de ces valeurs d'évaluation partielle est additionnée à chacune des premières valeurs d'évaluation pour former respectivement une valeur d'évaluation globale, chaque deuxième séquence partielle étant terminée lorsque la valeur d'évaluation globale dépasse une première valeur-seuil mais la comparaison principale avec évaluation pour chaque autre séquence partielle de signaux de référence étant poursuivie dans le même jeu de séquences jusqu'à ce qu'une fin de mot suivante soit atteinte, une première valeur d'évaluation suivante étant produite,
   - les premières valeurs d'évaluation présentes simultanément minimales sont sélectionnées pour reconnaître provisoirement les séquences de mots ainsi affectées, les autres séquences étant terminées ;
   - la séquence reconnue de mots est représentée par une première séquence non terminée avec une valeur minimale qui lui est affectée parmi les différentes premières valeurs d'évaluation.

2. Procédé selon la revendication 1, la première valeur-seuil ayant une relation algébrique déterminée par rapport à la valeur minimale instantanée de toutes les valeurs d'évaluation globales qui font partie des premières valeurs d'évaluation.

3. Procédé selon la revendication 2, la relation préalablement déterminée étant un intervalle déterminé par rapport à la valeur-seuil.

4. Procédé selon la revendication 3, chacune des premières séquences étant terminée lorsqu'elle dépasse la valeur d'évaluation minimale instantanée de la plage de valeur-seuil préalablement déterminée.

5. Procédé selon l'une des revendications 1 à 4, une évaluation partielle provisoire continue étant effectuée pendant la comparaison préalable et la comparaison préalable étant terminée pour chaque valeur d'évaluation partielle provisoire courante qui dépasse une troisième valeur-seuil préalablement déterminée.

6. Procédé selon la revendication 5, la troisième valeur-seuil étant égale à la valeur d'évaluation partielle constante minimale instantanée majorée d'une troisième plage de valeur-seuil.

7. Procédé selon l'une des revendications 1 à 6, chacune des séquences partielles correspondant à la longueur d'un phonème individuel.

8. Procédé selon l'une des revendications 1 à 7, chaque deuxième signal de test étant un nombre pair.

9. Procédé selon l'une des revendications 1 à 8, chacune des valeurs d'évaluation qui a été obtenue pendant la comparaison préalable étant sauvée dans une mémoire intermédiaire pour être mise en oeuvre dans la comparaison principale.

10. Dispositif de mise en oeuvre du procédé selon l'une des revendications 1 à 9 avec :

    - des moyens d'introduction (10) pour la réception d'un signal de parole,
    - des moyens de lecture (12) alimentés par ces moyens d'introduction (10) en vue de la lecture du signal de parole à des moments répétés et en vue de la production d'un signal de test à chaque moment,
    - des moyens de comparaison et d'évaluation (20) qui sont alimentés par les moyens de lecture (12) pour affecter, pour un premier signal de test déterminé, une première valeur d'évaluation à chaque première séquence de mots provisoirement reconnus qui se termine par ce premier signal de test,

    caractérisé par:

-	des moyens d'évaluation préalable (14) qui sont couplés avec des moyens de lecture (12) et avec des moyens de mémoire (16) pour l'enregistrement d'un jeu de séquences de signaux de référence, chaque séquence représentant un mot de vocabulaire pour affecter à partir d'un deuxième signal de test déterminé suivant le premier signal de test à des premières séquences partielles de longueur limitées des valeurs d'évaluation préalables par rapport à chacune des séquences partielles différentes de signaux de référence du jeu de séquences, chaque séquence partielle représentant une partie initiale d'un mot de vocabulaire et pour amener ces séquences aux moyens de comparaison et d'évaluation (20), les moyens de comparaison et d'évaluation étant conçus pour additionner chaque première valeur d'évaluation à chacune des valeurs d'évaluation préalable et former une somme et terminer chaque séquence pour lesquelles une deuxième séquence partielle de la somme correspondante dépasse une valeur-seuil instantanée et pour poursuivre la comparaison avec une évaluation pour toutes les séquences inachevées de signaux de référence jusqu'à ce que la fin d'un mot suivant pour lequel une première valeur d'évaluation suivante est produite soit atteinte.

FIG.1

FIG.2

FIG.3